# EUROPÄISCHE PATENTSCHRIFT

(11) **EP 2 952 367 B1**
(45) Veröffentlichungstag und Bekanntmachung des Hinweises auf die Patenterteilung: **01.01.2020**
(21) Anmeldenummer: 15169689.5
(22) Anmeldetag: 28.05.2015
(51) Int. Cl.: B60D 1/06, B60D 1/64

(54) **ANHÄNGEKUPPLUNG**
TRAILER COUPLING
ATTELAGE

(30) Priorität: 06.06.2014 DE 102014108071
(43) Veröffentlichungstag der Anmeldung: 09.12.2015
(73) Patentinhaber: ACPS Automotive GmbH, 71706 Markgröningen (DE)
(72) Erfinder: Burkhardt, Volker, 71696 Möglingen (DE); Noatsch, Bernd, 71069 Sindelfingen (DE)
(74) Vertreter: Hoeger, Stellrecht & Partner Patentanwälte mbB

(56) Entgegenhaltungen:
- EP-A2- 2 037 545
- DE-U1- 29 800 542
- DE-U1- 29 825 216
- DE-U1-202010 004 439

## Beschreibung

Die Erfindung betrifft eine Anhängekupplung umfassend einen eine Kupplungskugel tragenden sowie eine Steckdosenaufnahme für eine Steckdose zur Stromversorgung von an der Kupplungskugel angreifenden Einheiten aufweisenden Kugelhals, wobei die Steckdose ein Steckdosengehäuse mit einer Gehäusehülse aufweist, die mit einer Einstecköffnung versehen ist und wobei die Einstecköffnung durch einen an der Gehäusehülse schwenkbar gelagerten Deckel verschließbar ist, wobei die Steckdosenaufnahme einen Aufnahmekanal aufweist, in welchem sich die Gehäusehülse von einer ersten Seite der Steckdosenaufnahme ausgehend hineinerstreckt, wobei die Gehäusehülse an der ersten Seite der Steckdosenaufnahme mit einer Anlagefläche anliegt und wobei die Gehäusehülse an der Steckdosenaufnahme durch ein von einer zweiten Seite der Steckdosenaufnahme ausgehend aufgesetztes Halteelement fixiert ist.

Derartige Anhängekupplungen sind aus der DE 298 25 216 U1 bekannt.

Unter Einheiten, die an der Kupplungskugel angreifen sind dabei entweder Zugkugelkupplungen von Anhängern zu verstehen, die an der Kupplungskugel angreifen, so dass über die Kupplungskugel eine gelenkige Verbindung zum Anhänger hergestellt wird, oder es sind Lastenträger, beispielsweise Fahrradträger, die an der Kupplungskugel angreifen und an dieser montiert werden, wobei der gesamte Lastenträger ausschließlich durch die Kupplungskugel und den Kugelhals getragen wird.

Bei derartigen Anhängekupplungen besteht das Problem, die Steckdose möglichst günstig und einfach montieren zu können.

Diese Aufgabe wird bei einer Anhängekupplung der eingangs beschriebenen Art erfindungsgemäß durch die Merkmale des Anspruchs 1 gelöst.

Der Vorteil der erfindungsgemäßen Lösung ist darin zu sehen, dass damit eine einfache Möglichkeit besteht, die Gehäusehülse an der Steckdosenaufnahme zu fixieren, ohne dass - wie bisher üblich - das Steckdosengehäuse durch Schrauben mit der Steckdosenaufnahme verbunden wird.

Darüber hinaus hat die erfindungsgemäße Lösung mit dem Vorsehen einer Rastverbindung noch den Vorteil, dass die Rastverbindung so ausgeführt werden kann, dass diese sich an verschiedene Ausführungen der Steckdosenaufnahme mit üblichen Toleranzen anpassen kann.

Die erfindungsgemäße Lösung sieht vor, dass das Halteelement sich in dem Aufnahmekanal abstützt.

Dabei kann der Aufnahmekanal beispielsweise Ausnehmungen aufweisen, in denen sich das Halteelement abstützt.

Eine vorteilhafte Lösung sieht jedoch vor, dass sich das Halteelement an einem sich konisch erweiternden Wandbereich des Aufnahmekanals abstützt.

Insbesondere ist dabei der konisch erweiternde Wandbereich so ausgeführt, dass dieser sich in Richtung der zweiten Seite der Steckdosenaufnahme erweitert, so dass ein von Seiten der zweiten Seite in den Aufnahmekanal eingesetztes Halteelement sich an dem sich in Richtung zur ersten Seite hin verengenden konischen Wandbereich abstützen kann.

Alternativ oder ergänzend ist hierzu vorgesehen, dass sich das Halteelement mit einem Stützflansch an einer der ersten Seite gegenüberliegenden Seite der Steckdosenaufnahme abstützt.

Darüber hinaus ist es vorteilhaft, wenn die Steckdose in der Steckdosenaufnahme drehfest fixiert ist.

Dies wäre beispielsweise dadurch möglich, dass die Gehäusehülse beispielsweise durch Formschlusselemente in der Gehäuseaufnahme drehfest fixiert ist.

Eine besonders vorteilhafte Lösung sieht jedoch vor, dass das Halteelement an der Steckdosenaufnahme durch Formschlusselemente drehfest festgelegt ist.

Eine drehfeste Festlegung des Halteelements hat den Vorteil, dass dadurch die Möglichkeit besteht, einerseits das Halteelement, in dessen Bereich üblicherweise eine Kabelführung verläuft, eindeutig und drehfest festzulegen, andererseits die Möglichkeit besteht, die Ausrichtung der Gehäusehülse relativ zum Halteelement zu variieren.

Insbesondere ist dabei vorgesehen, dass das Halteelement ein Formschlusselement aufweist, welches mit einem Formschlusselement der Steckdosenaufnahme eine drehfeste Formschlussverbindung eingeht.

Diese Formschlusselemente könnten beispielsweise als Verzahnungen und Gegenverzahnungen ausgebildet sein oder als beliebige, nicht rotationssymmetrische Gebilde, die miteinander korrespondierend ausgebildet sind.

Eine besonders günstige Lösung sieht vor, dass die Steckdosenaufnahme als Formschlusselement eine sich von der zweiten Seite der Steckdosenaufnahme in den Aufnahmekanal hineinerstreckende Tasche aufweist.

In diesem Fall ist zweckmäßigerweise vorgesehen, dass das Halteelement einen in die Tasche eingreifenden Körper aufweist, so dass durch den Körper und die Tasche die Formschlusselemente gebildet werden.

Insbesondere ist zweckmäßigerweise vorgesehen, dass die Formschlusselemente sich parallel zu einer Aufsetzrichtung des Halteelements erstrecken, so dass die Formschlusselemente durch Aufsetzen des Halteelements miteinander in Eingriff kommen.

Hinsichtlich einer Ausrichtung des Halteelements und der Gehäusehülse relativ zueinander wurden im Zusammenhang mit den bislang erläuterten Ausführungsbeispielen keine weiteren Angaben gemacht.

So sieht eine vorteilhafte Lösung vor, dass das Halteelement und die Gehäusehülse in mindestens einer Drehstellung, vorzugsweise in verschiedenen Drehstellungen, relativ zueinander drehfest miteinander verbindbar sind.

Das heißt, dass die Möglichkeit besteht, die Gehäusehülse in mindestens einer, vorzugsweise in unterschiedlichen Drehausrichtungen, relativ zum Halteelement zu fixieren.

Beispielsweise ist zur Fixierung des Halteelements und der Gehäusehülse relativ zueinander in mindestens einer Drehstellung vorgesehen, dass das Halteelement und die Gehäusehülse durch Formschlusselemente drehfest verbunden sind.

Derartige Formschlusselemente könnten beispielsweise radiale Verzahnungen sein, die ineinander greifen.

Bei derartigen radialen Verzahnungen besteht auch die Möglichkeit, eine unterschiedliche Ausrichtung der Gehäusehülse relativ zum Halteelement bei der Verbindung zwischen Gehäusehülse und Halteelement zu wählen.

Besonders zweckmäßig ist eine Lösung, bei welcher mindestens eines der Formschlusselemente an mehreren Winkelpositionen um die Mittelachse an der Gehäusehülse und/oder dem Halteelement angeordnet ist, in welches das jeweils andere Formschlusselement eingreift, so dass bereits durch die mehreren Winkelpositionen des einen Formschlusselements die Möglichkeit besteht, das jeweils andere Formschlusselement mit dem einen der Formschlusselemente in einer dieser Winkelpositionen in Eingriff zu bringen.

Beispielsweise erstrecken sich auch die Formschlusselemente zur drehfesten Fixierung der Gehäusehülse und des Halteelements zueinander parallel zur Aufsetzrichtung.

Hinsichtlich der Realisierung der Rastverbindung zwischen dem Halteelement und der Gehäusehülse sind die unterschiedlichsten Lösungen denkbar.

Eine vorteilhafte Lösung sieht vor, dass die Rastverbindung innerhalb eines sich in der Aufsetzrichtung erstreckenden Rastbereichs positionsunabhängig wirksam ist.

Das heißt, dass die Rastverbindung einen sich in der Aufsetzrichtung erstreckenden Rastbereich aufweist und dass innerhalb dieses Rastbereichs die Rastverbindung wirksam ist, unabhängig davon, an welcher Position innerhalb des Rastbereichs die Rastverbindung erfolgt.

Mit einer derartigen Rastverbindung wird die Möglichkeit geschaffen, die Steckdose in der Steckdosenaufnahme toleranzunempfindlich zu montieren, das heißt, dass die Steckdosenaufnahme mit nennenswerten Toleranzen hergestellt werden kann, insbesondere nennenswerten Toleranzen hinsichtlich des Abstandes der ersten Seite von der zweiten Seite und/oder der Ausbildung des Aufnahmekanals und dass trotzdem eine stets zuverlässige einfache und sichere Montage der Steckdose dadurch möglich ist, dass die Rastverbindung innerhalb des Rastbereichs positionsunabhängig wirksam ist, so dass beispielsweise ein variierender Abstand der ersten Seite von der zweiten Seite und/oder ein variierender Durchmesser des Aufnahmekanals durch unterschiedliche Positionierung des Halteelements relativ zur Gehäusehülse und somit durch unterschiedlich weites Aufschieben des Halteelements in der Aufsetzrichtung ausgeglichen werden können.

Ein derartiger positionsunabhängiger Rastbereich lässt sich vorzugsweise dadurch realisieren, dass das Halteelement an der Gehäusehülse dadurch verrastbar ist, dass entweder die Gehäusehülse oder das Halteelement eine Rastverzahnung mit einer sich parallel zur Aufsetzrichtung erstreckenden Folge von Rastzähnen und das Halteelement oder die Gehäusehülse eine Gegenverzahnung mit mindestens einem in die Folge von Rastzähnen eingreifenden Rastzahn aufweisen.

Durch die Ausdehnung der Folge von Rastzähnen der Rastverzahnung in der Aufsatzrichtung besteht die Möglichkeit, die Ausdehnung des Rastbereichs festzulegen, innerhalb von welchem die Rastverbindung positionsunabhängig wirksam ist.

Die erfindungsgemäße Lösung lässt sich jedoch vorteilhaft aber auch durch weitere im Rahmen einer Anhängekupplung wirksame Merkmale weiterbilden.

So sieht eine besonders zweckmäßige Lösung vor, dass das Halteelement als Teil eines Gehäusedeckels zum Abschluss der Gehäusehülse auf einer der Einsteckung gegenüberliegenden Seite, insbesondere einer rückseitigen Öffnung der Gehäusehülse, ausgebildet ist.

Damit lässt sich in einfacher Weise die Fixierung der Gehäusehülse in der Steckdosenaufnahme mit dem Anbringen eines Deckels zum Abschluss der Gehäusehülse kombinieren.

Darüber hinaus ist bei einer erfindungsgemäßen Anhängekupplung ein Sensor im Kugelhals oder in der Kupplungskugel vorgesehen, so dass eine Sensorverbindungsleitung auch im Bereich des Aufnahmekanals verlaufen muss.

So sieht eine vorteilhafte Lösung vor, dass der Aufnahmekanal eine Vertiefung zur Aufnahme einer Sensorverbindungsleitung aufweist.

Darüber hinaus sieht eine weitere vorteilhafte Lösung alternativ oder ergänzend hierzu vor, dass die Sensorverbindungsleitung an einer Außenfläche des Halteelements entlang geführt ist, so dass beispielsweise die Möglichkeit besteht, die Sensorverbindungsleitung zwischen der Außenfläche des Halteelements und dem Aufnahmekanal, insbesondere der Vertiefung in dem Aufnahmekanal, zu führen.

Alternativ dazu besteht vorteilhafterweise die Möglichkeit, das Halteelement so auszubilden, dass dieses eine Führung für die Sensorverbindungsleitung, insbesondere einen Kanal als Führung für die Sensorverbindungsleitung aufweist, so dass die Sensorverbindungsleitung in der Führung oder dem Kanal des Halteelements verlaufen kann.

Vorzugsweise liegt dabei die Führung oder der Kanal des Halteelements außerhalb der Außenfläche des Halteelements, so dass beispielsweise die Führung oder der Kanal auch so angeordnet werden können, dass sie in der Vertiefung des Aufnahmekanals angeordnet sind.

Alternativ zur Führung der Sensorverbindungsleitung im Bereich des Aufnahmekanals oder im Bereich um das Halteelement, insbesondere zwischen dem Halteelement und dem Aufnahmekanal, sieht eine weitere vorteilhafte Lösung vor, dass die Sensorverbindungsleitung in den Gehäusedeckel der Steckdose geführt ist.

Besonders günstig ist es außerdem, wenn in dem Gehäusedeckel eine Steckverbindung für die Sensorverbindungsleitung angeordnet ist.

In diesem Fall bietet der Gehäusedeckel eine zweckmäßige Möglichkeit, eine Steckverbindung für die Steckverbindungsleitung vorzusehen.

Diese Steckverbindung könnte dabei so ausgebildet sein, dass sie lose in dem Gehäusedeckel liegt.

Eine besonders vorteilhafte Lösung sieht jedoch vor, dass die Steckverbindung an dem Gehäusedeckel fixiert, insbesondere lösbar fixiert ist.

Eine andere vorteilhafte Lösung sieht vor, dass in dem Gehäusedeckel ein Steckverbinderelement eines Steckverbinders für die Sensorverbindungsleitung integriert ist.

Bei dieser Lösung besteht somit nicht mehr die Möglichkeit, den Steckverbinder innerhalb des Gehäuses zu fixieren, sondern die Fixierung erfolgt bereits dadurch, dass das eine Steckverbinderelement des Steckverbinders in den Gehäusedeckel integriert ist.

Bei einer weiteren vorteilhaften Lösung ist vorgesehen, dass in dem Gehäusedeckel ein Aufnahmeraum für eine elektrische oder elektronische Schaltung vorgesehen ist.

Eine derartige elektronische Schaltung kann in vielfältiger Art und Weise eingesetzt werden.

Diese elektronische Schaltung könnte beispielsweise eine einem Sensor zugeordnete elektronische Schaltung oder eine Steuerungselemente für die Anhängekupplung oder Überwachungselemente für die Anhängekupplung umfassende oder mit diesen zusammenwirkende elektronische Schaltung sein.

Die elektronische Schaltung kann dabei aber auch noch zusätzliche, beispielsweise von Seiten des Gehäusedeckels aus bedienbare Schaltelemente oder auch an dem Gehäusedeckel angeordnete, insbesondere in den Gehäusedeckel integrierte Anzeigeelemente umfassen.

Eine besonders günstige Lösung sieht vor, dass der Gehäusedeckel einen Aufnahmeraum für eine mit der Sensorverbindungsleitung verbundene elektronische Schaltung aufweist, so dass diese elektronische Schaltung beispielsweise eine Auswerteschaltung oder Steuerschaltung für ein mit der Sensorverbindungsleitung verbundenes Sensorsystem sein kann.

Hinsichtlich eines mit der Sensorverbindungsleitung verbundenen Sensorsystems wurden bislang keine näheren Angaben gemacht.

So sieht eine vorteilhafte Lösung vor, dass die Sensorverbindungsleitung zu einem dem Kugelhals zugeordneten Sensorsystem geführt ist.

Ein derartiges Sensorsystem kann beispielsweise ein Knickwinkelsensor sein, welcher in die Kupplungskugel oder den Kugelhals, insbesondere einen sich an die Kupplungskugel anschließenden Bereich des Kugelhalses, integriert ist.

Ein derartiges Sensorsystem kann aber auch ein Lastsensor sein, welcher in die Kupplungskugel oder in den Kugelhals integriert ist.

Ein derartiger Lastsensor kann beispielsweise als Stützlastsensor ausgebildet sein, welcher lediglich die Stützlast erfasst, die auf die Kupplungskugel und/oder den Kugelhals wirkt.

Ein derartiger Sensor kann aber auch als die Belastung der Kupplungskugel und/oder des Kugelhalses insgesamt erfassender Sensor ausgeführt sein, der nicht nur die Stützlast, sondern auch alle anderen, an der Kupplungskugel und/oder dem Kugelhals angreifenden Kräfte erfasst.

Weitere Merkmale und Vorteil der Erfindung sind Gegenstand der nachfolgenden Beschreibung sowie der zeichnerischen Darstellung einiger Ausführungsbeispiele.

In der Zeichnung zeigen:
- Fig. 1: eine schematische Seitenansicht eines Kraftfahrzeugs mit einer Anhängekupplung;
- Fig. 2: eine Darstellung der am Fahrzeug montierbaren Anhängekupplung;
- Fig. 3: ein erstes Ausführungsbeispiel eines Kugelhalses einer erfindungsgemäßen Anhängekupplung mit Kupplungskugel;
- Fig. 4: eine Ansicht des ersten Ausführungsbeispiels des Kugelhalses in Richtung des Pfeils A in Fig. 3 ohne in die Steckdosenaufnahme eingesetzte Steckdose;
- Fig. 5: eine vergrößerte Ansicht der Steckdosenaufnahme ohne eingesetzte Steckdose;
- Fig. 6: eine Darstellung des Kugelhalses des ersten Ausführungsbeispiels der erfindungsgemäßen Anhängekupplung ähnlich Fig. 4 mit eingesetzter Steckdose;
- Fig. 7: einen Schnitt längs Linie 7-7 in Fig. 6;
- Fig. 8: einen Schnitt längs Linie 8-8 in Fig. 7;
- Fig. 9: eine perspektivische Darstellung der Gehäusehülse des Steckdosengehäuses ohne Gehäusedeckel;
- Fig. 10: eine perspektivische Darstellung des Gehäusedeckels für die Steckdose gemäß Fig. 9 entsprechend dem ersten Ausführungsbeispiel der erfindungsgemäßen Anhängekupplung;
- Fig. 11: eine vergrößerte Darstellung einer Rastverzahnung zwischen dem Haltering und der Gehäusehülse;
- Fig. 12: eine Darstellung ähnlich Fig. 4 bei einem zweiten Ausführungsbeispiels der erfindungsgemäßen Anhängekupplung;
- Fig. 13: einen Schnitt ähnlich Fig. 7 bei dem zweiten Ausführungsbeispiel der erfindungsgemäßen Anhängekupplung;
- Fig. 14: einen Schnitt ähnlich Fig. 13 bei einem dritten Ausführungsbeispiel einer erfindungsgemäßen Anhängekupplung;
- Fig. 15: einen Schnitt längs Linie 15-15 in Fig. 14 durch den Gehäusedeckel des dritten Ausführungsbeispiels der erfindungsgemäßen Anhängekupplung;
- Fig. 16: einen Schnitt ähnlich Fig. 7 durch ein viertes Ausführungsbeispiel der erfindungsgemäßen Anhängekupplung;
- Fig. 17: einen Schnitt ähnlich Fig. 7 durch ein fünftes Ausführungsbeispiel der erfindungsgemäßen Anhängekupplung;
- Fig. 18: einen Schnitt ähnlich Fig. 7 durch ein sechstes Ausführungsbeispiel der erfindungsgemäßen Anhängekupplung und ;
- Fig. 19: einen Schnitt ähnlich Fig. 7 durch ein siebtes Ausführungsbeispiel der erfindungsgemäßen Anhängekupplung.

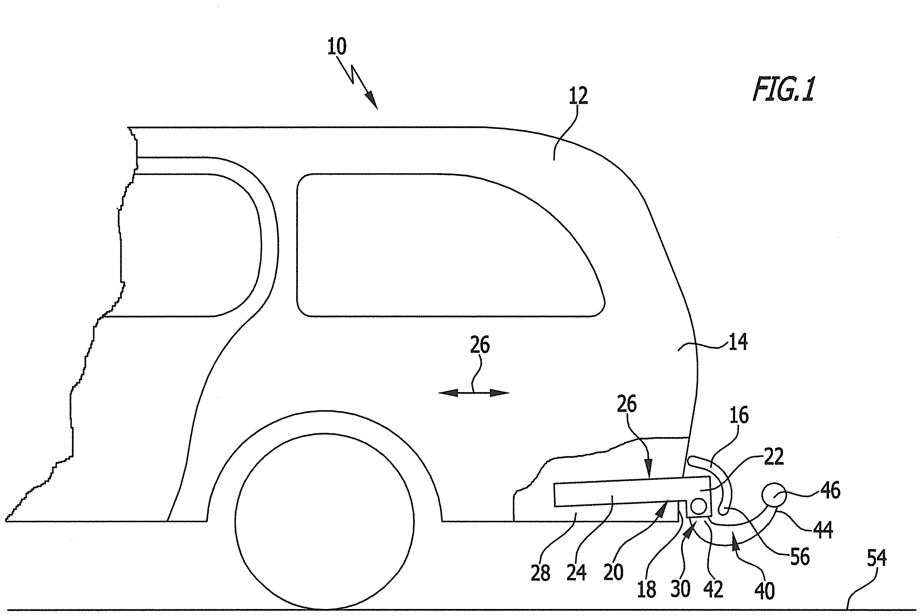

Ein in Fig. 1 dargestelltes und als Ganzes mit 10 bezeichnetes Kraftfahrzeug umfasst eine Kraftfahrzeugkarosserie 12, welche an einem Heckbereich 14 eine Stoßfängereinheit 16 trägt. Von der Stoßfängereinheit 16 überdeckten Rückseite 18 des Heckbereichs 14 und der Stoßfängereinheit 16 ist ein Querträger 22 einer Kupplungsträgereinheit 20 vorgesehen, welcher durch Seitenträger 24 an dem Heckbereich 14 der Kraftfahrzeugkarosserie 12 dadurch fixiert ist, dass sich die Seitenträger 24 parallel zu einer Längsrichtung 26 der Kraftfahrzeugkarosserie 12 erstrecken und in Seitenbereichen 28 des Heckbereichs 14 an diesem fixiert sind.

Die Kupplungsträgereinheit 20 ist ferner mit einer als Ganzes mit 30 bezeichneten Lagereinheit versehen, deren Lagerbasis 32 fest mit dem Querträger 22 verbunden ist.

Die Lagereinheit 30 umfasst ferner ein als Ganzes mit 34 bezeichnetes Lagerelement, welches mit einem ersten Ende 42 eines als Ganzes mit 40 bezeichneten Kugelhalses verbunden ist, der sich von dem ersten Ende 42 bis zu einem zweiten Ende 44 erstreckt und an seinem zweiten Ende 44 eine als Ganzes mit 46 bezeichnete Kupplungskugel trägt.

Das Lagerelement 34 kann ein mit der Lagerbasis 32 fest verbundenes oder ein abnehmbar an der Lagerbasis 32 montierbares Lagerelement sein.

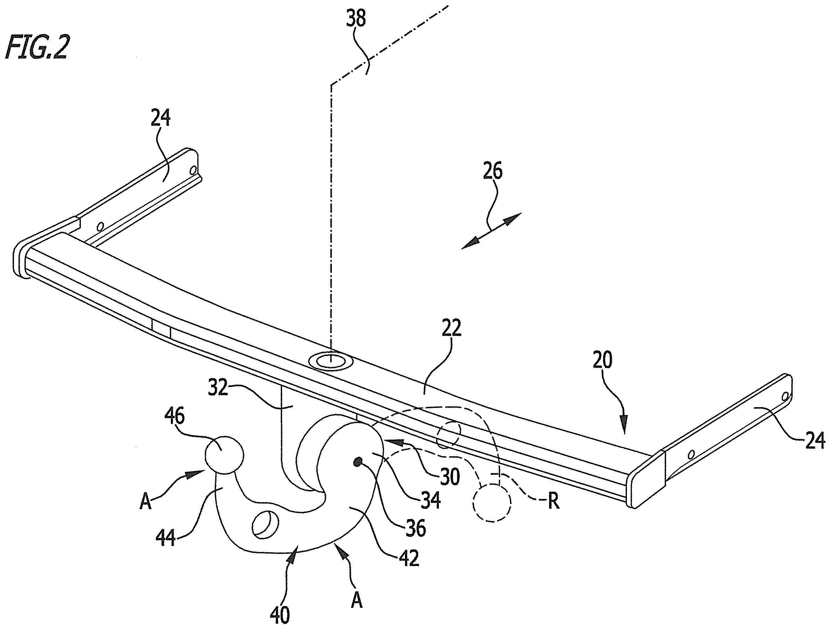

Alternativ dazu kann das Lagerelement 34 jedoch ein Schwenklagerelement sein, welches relativ zur Lagerbasis 32 um eine mit 36 bezeichnete Schwenkachse verschwenkbar ist, so dass der Kugelhals 40 von der in Fig. 2 mit durchzogenen Linien dargestellten Arbeitsstellung A in eine mit gestrichelten Linien dargestellte Ruhestellung R verschwenkbar ist, in welcher sich der Kugelhals 40 ausgehend von der Lagerbasis 32 quer zur Längsrichtung 26 der Kraftfahrzeugkarosserie 12 und damit längs des Querträgers 22 erstreckt.

Damit verläuft der Kugelhals 40 in der gestrichelt dargestellten Ruhestellung R quer zu einer vertikalen Längsmittelebene 38 der Kraftfahrzeugkarosserie 12 und auch der Kupplungsträgereinheit 20, wobei die vertikale Längsmittelebene 38 damit auch parallel zur Längsrichtung 26 verläuft.

Ferner verläuft auch die Schwenkachse 36 vorzugsweise quer zur Längsmittelebene 38, jedoch relativ zur vertikalen Längsmittelebene 38 um einen Winkel geneigt, wobei der Winkel weniger als 70° und mehr als 20° beträgt.

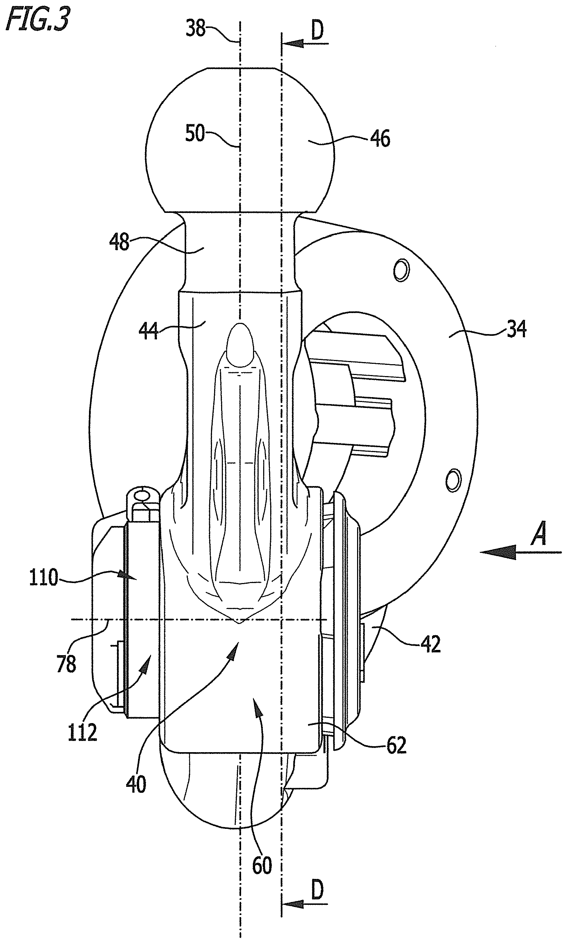

Ein Ausführungsbeispiel eines derartigen Kugelhalses 40 ist vergrößert in Fig. 3 dargestellt, wobei der Kugelhals 40 an dem Lagerelement 34 angeformt ist und das Lagerelement 34 in diesem Fall als Schwenklagerelement zur schwenkbaren Lagerung an der Lagerbasis 32 ausgebildet ist.

Bei dem dargestellten Ausführungsbeispiel des Kugelhalses 40 trägt dieser an seinem zweiten Ende 44 einen Kugelansatz 48, der eine zylindrisch zu einer Kugelmittelachse 50 verlaufende Mantelfläche aufweist, die in einem radialen Abstand um die Kugelmittelachse 50 verläuft, der kleiner ist als ein Radius der Kupplungskugel 46.

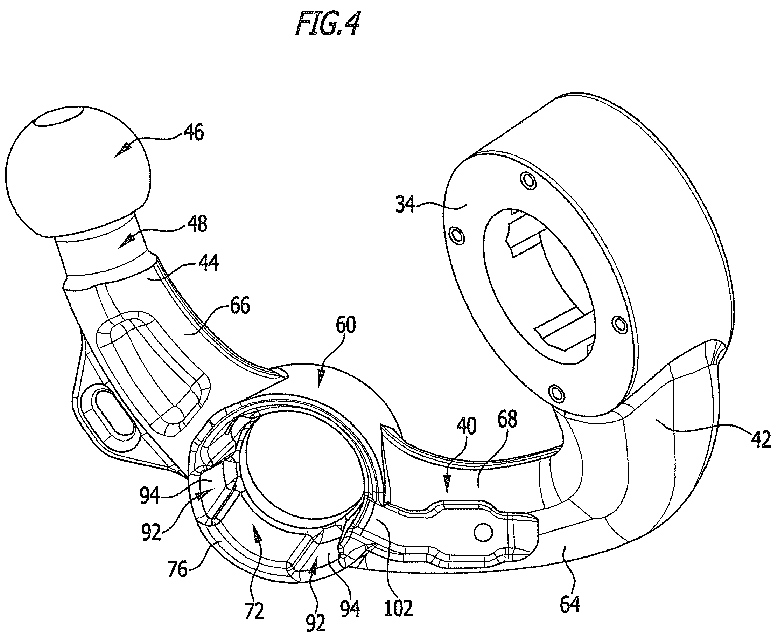

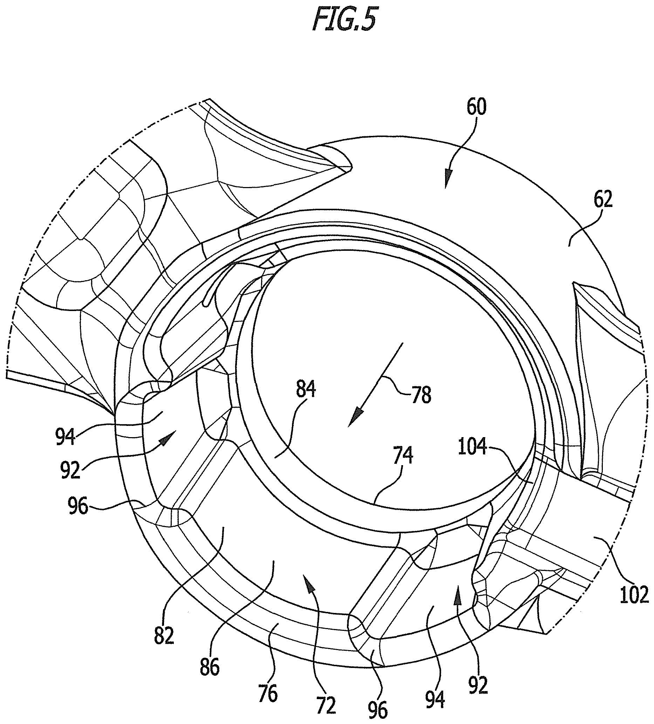

Bei dem dargestellten Ausführungsbeispiel des Kugelhalses 40 weist dieser, wie in Fig. 3 bis 5 dargestellt, eine Gehäuseaufnahme 60 auf, die einstückig in den Kugelhals 40 integriert ist und in Form eines Ringkörpers 62 ausgebildet ist, der zwischen einem Kugelhalsabschnitt 64 liegt, welcher sich von dem ersten Ende 42 des Kugelhalses 40 bis zum Ringkörper 62 erstreckt und einem zweiten Kugelhalsabschnitt 66 liegt, welcher sich von dem Ringkörper 62 bis zu dem zweiten Ende 44 des Kugelhalses erstreckt.

Der Ringkörper 62 der Gehäuseaufnahme 60 umschließt einen als Ganzes mit 72 bezeichneten Aufnahmekanal der Gehäuseaufnahme 60, welcher sich von einer ersten Stirnseite 74 des Ringkörpers 62 bis zu einer zweiten Stirnseite 76 des Ringkörpers 62 erstreckt und eine Mittelachse 78 bildet, die quer zur Längsmittelebene 38 verläuft, dabei gegenüber der Längsmittelebene 38 um einen spitzen Winkel geneigt sein kann, vorzugsweise jedoch aber senkrecht zur Längsmittelebene 38 verläuft.

Der Aufnahmekanal 72 wird dabei gebildet durch eine diesen umschließende Kanalinnenwand 82, die im Anschluss an die erste Stirnseite 74 einen im Wesentlichen zylindrisch zur Mittelachse 78 verlaufenden und um die Mittelachse 78 umlaufenden Wandbereich 84 aufweist sowie einen vom Wandbereich 84 ausgehenden und sich bis zur zweiten Stirnseite 76 konisch erweiternden Wandbereich 86 aufweist, der somit beim Übergang zur zweiten Stirnseite 76 in größerem radialem Abstand von der Mittelachse 78 verläuft als nahe des zylindrischen Wandbereichs 84.

Darüber hinaus ist der Aufnahmekanal 72 mit Formschlusselementen 92 versehen, welche als sich radial relativ zum konischen Wandbereich 86 erweiternde Taschen 94 ausgebildet sind, die sich ausgehend von dem zylindrischen Wandbereich 84 in Richtung der zweiten Stirnseite 76 erstrecken und in der Stirnseite 76 liegende Taschenöffnungen 96 aufweisen, so dass die Taschen 94 über die in der zweiten Stirnseite 76 liegenden Taschenöffnungen 96 zugänglich sind.

Neben den Formschlusselementen 92 mündet in dem konischen Wandbereich 86 eine in dem ersten Kugelhalsabschnitt 64 verlaufende Kabelführungsrinne 102, welche eine in den konischen Wandbereich 86 einmündende und sich an die zweite Stirnseite 76 anschließende Öffnung 104 aufweist.

Die Kabelführungsrinne 102 liegt sowohl gegenüber der zweiten Stirnseite 76 als auch einer Oberfläche 68 des ersten Kugelhalsabschnitts 64 zurückgesetzt.

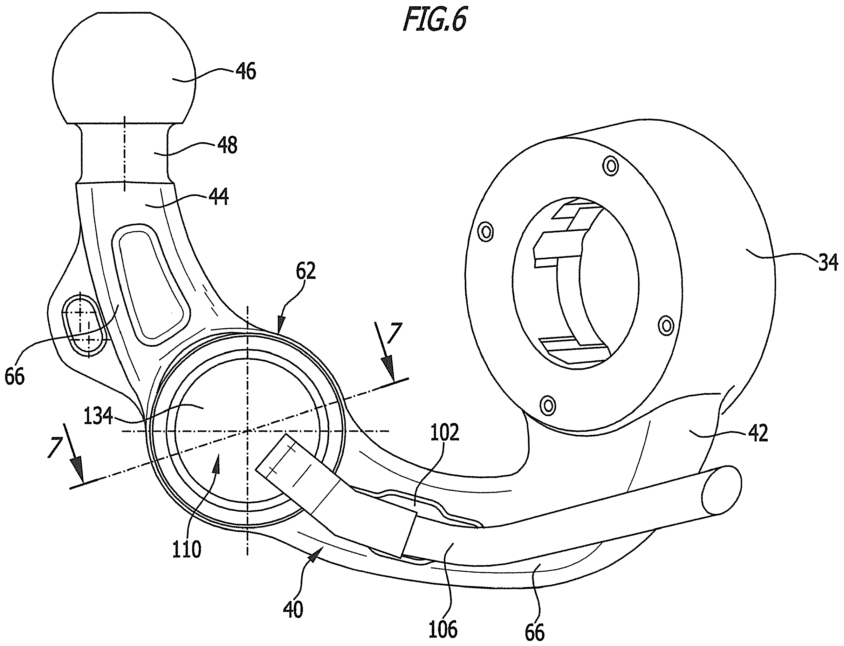

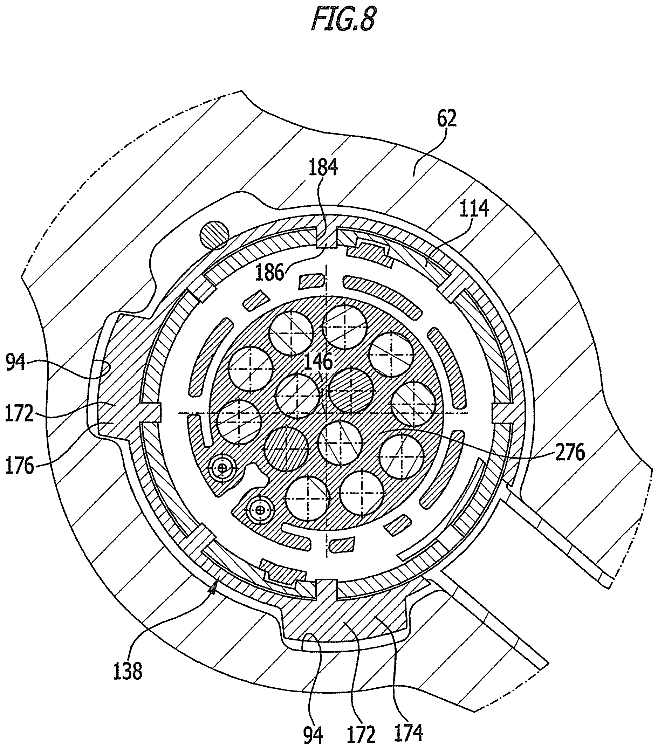

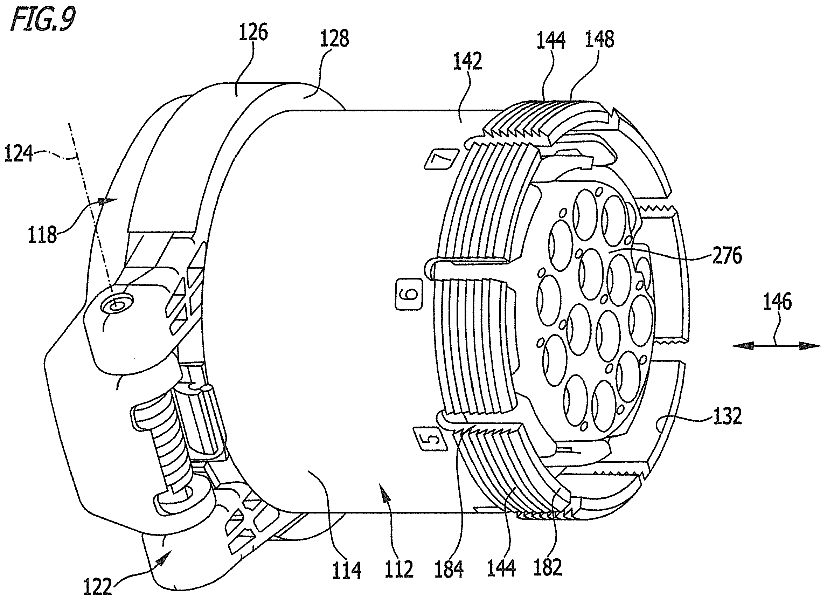

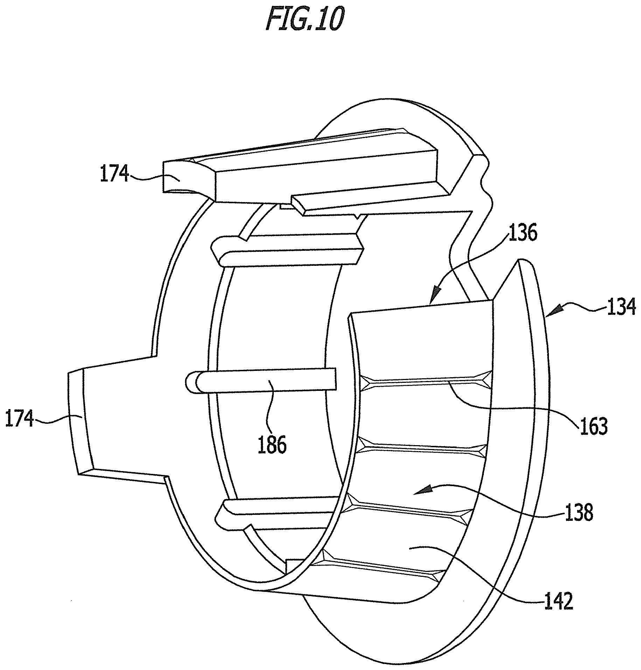

Wie in den Fig. 3 und 6 bis 10 dargestellt, ist in die Steckdosenaufnahme 60 eine als Ganzes mit 110 bezeichnete Steckdose eingesetzt, welche ein als Ganzes mit 112 bezeichnetes Steckdosengehäuse aufweist, welches in die Steckdosenaufnahme 60 eingreift.

Das Steckdosengehäuse 112 umfasst seinerseits eine Gehäusehülse 114, die mit einer Einstecköffnung 116 versehen ist.

Die Einstecköffnung 116 ist durch einen Deckel 118 verschließbar, der mit einem als Ganzes mit 122 bezeichneten Deckelscharnier um eine Schwenkachse 124 verschwenkbar an der Gehäusehülse 114 gelagert ist.

Das Deckelscharnier 122 ist an einen sich an die Einstecköffnung 116 anschließenden Bund 126 angeformt, welcher eine an die erste Stirnseite 74 der Steckdosenaufnahme 60 anlegbare Anlagefläche 128 bildet, mit welcher das Steckdosengehäuse 112 in der montierten Stellung an der Steckdosenaufnahme 60 anliegt und gegen eine Bewegung in Richtung der zweiten Stirnseite 76 fixiert ist.

Die Gehäusehülse 114 erstreckt sich von Einstecköffnung 116 zu einer rückseitigen Öffnung 132, die durch einen Gehäusedeckel 134 erschließbar ist.

Der Gehäusedeckel 134 übergreift die rückseitige Öffnung 132 mit einem Abdeckkörper 136, an welchen ein Haltering 138 angeformt ist, der die Gehäusehülse 114 auf einer Außenumfangsseite 142 umgreift.

Zur Verbindung des Gehäusedeckels 134 mit der Gehäusehülse 114 weist die Gehäusehülse 114 auf ihrer Außenumfangsseite 142 nahe der rückseitigen Öffnung 132 Rastverzahnungen 144 auf, welche in Richtung parallel zu einer Mittelachse 146 des Steckdosengehäuses 112 eine Vielzahl von aufeinanderfolgenden Rastzähnen 148 aufweisen.

Beispielsweise sind paarweise einander gegenüberliegende Rastverzahnungen 144 hinsichtlich der Anordnung ihrer Rastzähne 148 identisch ausgebildet, wobei die Rastzähne 148 unterschiedlicher Paare in Richtung der Mittelachse 146 versetzt zueinander angeordnet sein können, um in Richtung der Mittelachse 146 eine noch feinere Positionierung des Halterings 138 zur Gehäusehülse zu ermöglichen, als sie durch den Abstand der Rastzähne 144 vorgegeben ist, nämlich dadurch, dass die Verrastung jeweils durch mindestens ein paar einander gegenüberliegender Rastverzahnungen 144 erfolgt, während ein anderes Paar oder andere Paare in dieser Position nicht zur Verrastung beitragen.

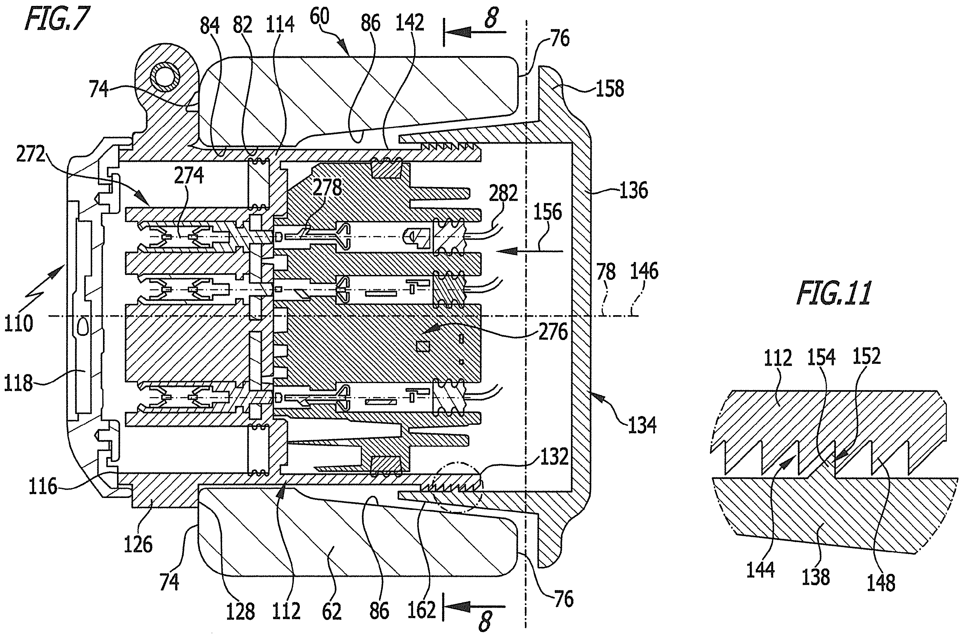

In diese Rastverzahnung 148 greift, wie in Fig. 11 dargestellt, eine an dem Haltering 138 angeformte Gegenverzahnung 152 ein, die mindestens einen Rastzahn 154 aufweist, gegebenenfalls aber auch weitere Rastzähne 154 aufweisen kann.

Vorzugsweise sind die Rastverzahnung 144 und die Gegenverzahnung 152 so ausgebildet, dass beim Aufschieben des Halterings 138 in einer Aufsetzrichtung 156, die parallel zur Mittelachse 146 verläuft, die beiden Verzahnungen 144 und 152 ineinandergreifen und miteinander sicher, vorzugsweise unlösbar, verrasten.

Das Aufsetzen des Gehäusedeckels 134 in der Aufsetzrichtung 156 erfolgt so lange, bis der Haltering 138 an der Steckdosenaufnahme 60 anliegt, so dass dadurch die gesamte Steckdose 110 gegen Bewegungen in Richtung der Mittelachse 78 des Aufnahmekanals 72 an der Steckdosenaufnahme 60 sicher gehalten ist, da einerseits die Anlagefläche 128 an der ersten Stirnseite 74 der Steckdosenaufnahme 60 anliegt und andererseits der Haltering 138 an der Steckdosenaufnahme 60 abgestützt ist.

Die Abstützung des Halterings 138 an der Steckdosenaufnahme 60 kann durch einen radial über den Haltering 138 überstehenden Stützflansch 158 erfolgen, der an der zweiten Stirnseite 76 anliegen kann und den Haltering 138 gegen eine Bewegung in Richtung der ersten Stirnseite 74 sichert.

Dies kann alternativ oder ergänzend dadurch erfolgen, dass der Haltering 138 mit einer konisch verlaufenden Außenfläche 162 versehen ist, welche dem konisch zur Mittelachse 78 verlaufenden Wandbereich 86 zugewandt ist, und insbesondere denselben Konuswinkel wie der konisch verlaufende Wandbereich 86 aufweist, so dass durch das Aufsetzen des Halterings 138 auf die Gehäusehülse 114 eine Zentrierung der Gehäusehülse 114 aufgrund der an den konischen Wandbereich 86 anliegenden konischen Außenfläche 162 und ein Abstützen gegen eine Bewegung des Halterings 138 in Richtung der ersten Stirnseite 74 erfolgt.

Dabei kann die Außenfläche 162 noch mit nach außen überstehenden Kratzrippen 163 versehen sein, die einen noch besseren passenden Sitz gewährleisten und zum Toleranzausgleich beitragen.

Darüber hinaus erfolgt eine radiale Zentrierung der Gehäusehülse 114 auch noch durch den zylindrischen Wandbereich 84 der Kanalinnenwand 82 im Bereich in einem sich an den Bund 126 anschließenden Bereich, so dass dadurch eine sichere Fixierung des Steckdosengehäuses 112 in der Steckdosenaufnahme 60 erfolgt.

Die Tatsache, dass beispielsweise die Rastverzahnung 144 eine Vielzahl von Rastzähnen 148 aufweist und die Gegenverzahnung 152 somit in einer der Vielzahl der Rastzähne 148 entsprechenden Vielzahl von Raststellungen mit der Rastverzahnung 144 verrastbar ist, erlaubt es somit, beim Aufsetzen des Halterings 138 mit dem Gehäusedeckel 134 und Verschieben derselben in der Aufsetzrichtung 156 Maßtoleranzen im Bereich des Ringkörpers 62 auszugleichen, die bei einer Herstellung des Ringkörpers 62 als Schmiedeteil entstehen.

Damit ist eine einfache und zuverlässige sowie für Maßtoleranzen unempfindliche Montage der Steckdose 110 in der Steckdosenaufnahme 60 möglich.

Zur drehfesten Festlegung der Steckdose 110 ist der Haltering 138 mit Formschlusselementen 172 in Form von Keilkörpern 174 versehen, die beim Aufsetzen des Halterings 138 in der Aufsetzrichtung 156 über die Taschenöffnungen 96 in die Taschen 94 einführbar sind, so dass der Haltering 138 durch die mit den Formschlusselementen 92 zusammenwirkenden Formschlusselemente 172 drehfest in dem Ringkörper 62 fixiert ist.

Die Positionierung durch die Keilkörper 174 kann beispielsweise noch dadurch toleranzunempfindlicher gemacht werden, dass die Keilkörper 174 mit nach außen überstehenden Kratzrippen 175 versehen werden.

Somit ist lediglich noch eine zusätzliche drehfeste Fixierung der Gehäusehülse 114 relativ zu dem Haltering 138 erforderlich.

Diese erfolgt dadurch, dass die Gehäusehülse 114 in einem die Rastverzahnungen 144 tragenden Endabschnitt 182 mit parallel zur Mittelachse 146 verlaufenden Schlitzen 184 versehen ist, in welche am Haltering 138 angeformte und radial in Richtung der Mittelachse 146 überstehende Stege 186 eingreifen.

Vorzugsweise sind die Schlitze 184 um die Mittelachse 146 in gleichen Winkelabständen angeordnet und die entsprechenden Stege 186 ebenfalls in gleichen Winkelabständen angeordnet, so dass die Möglichkeit besteht, die Gehäusehülse 114 formschlüssig in verschiedenen Drehstellungen relativ zum Haltering 138 drehfest zu fixieren und dadurch unterschiedliche Drehlagen der Gehäusehülse 114 relativ zu dem Haltering 138 vorzugeben.

Bei einem zweiten Ausführungsbeispiel einer erfindungsgemäßen Anhängekupplung sind diejenigen Teile, die mit denen des ersten Ausführungsbeispiels identisch sind, mit denselben Bezugszeichen versehen, so dass hinsichtlich der Beschreibung derselben vollinhaltlich auf die Ausführungen zum ersten Ausführungsbeispiel Bezug genommen werden kann.

Bei dem zweiten Ausführungsbeispiel ist beispielsweise dem zweiten Kugelhalsabschnitt 66 und/oder der Kupplungskugel 46 ein Sensorsystem 202 zugeordnet, zu welchem eine Sensorverbindungsleitung 204 geführt ist, die durch einen den Kugelhalsabschnitt 66, den Kugelansatz 48 und gegebenenfalls die Kupplungskugel 46 durchsetzenden Kanal 206 verläuft, der ebenfalls in den Aufnahmekanal 72 der Steckdosenaufnahme 60 einmündet, so dass die Sensorverbindungsleitung 204 innerhalb des Aufnahmekanals 72 weiterzuführen ist.

Ein derartiges Sensorsystem 202 ist beispielsweise ein Knickwinkelsensor zur Erfassung eines Knickwinkels zwischen dem Kugelhals 40 und einer an einer Anhängerdeichsel vorgesehenen Zugkugelkupplung und/oder ein Sensorsystem zur Erfassung von auf die Kupplungskugel 46 und/oder den Kugelhals 40 wirkenden Kräften.

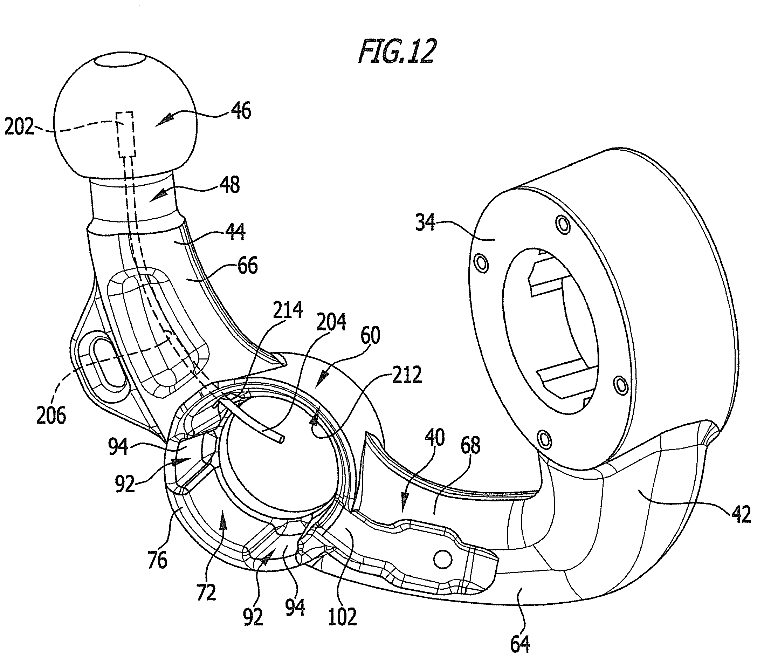

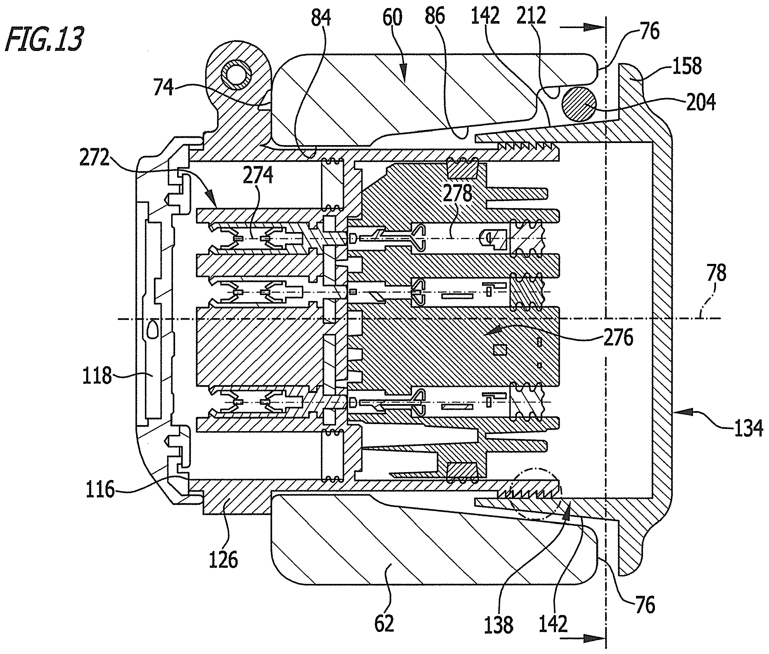

Hierzu ist, wie in Fig. 12 und 13 dargestellt, in dem Wandbereich 86 und zwar in unmittelbarem Anschluss an die zweite Stirnseite 76 eine stufenförmige Ausnehmung 212 vorgesehen, welche von einem relativ zur Kanalinnenwand 82 vertieft angeordneten Mündungsbereich 214 des Kanals 206 in den Aufnahmekanal 72 bis zu der Kabelführungsrinne 102 verläuft, und zwar insbesondere auf einer den Formschlusselementen 92 abgewandten Seite des konischen Wandbereichs 86 verläuft.

Im einfachsten Fall besteht die Möglichkeit, wie in Fig. 13 dargestellt, die Sensorverbindungsleitung 204 zwischen der Außenfläche 162 des Halterings 138 und der stufenförmigen Vertiefung 212 von dem Mündungsbereich 214 bis zu der Kabelführungsrinne 102 verlaufen zu lassen und dann in der Kabelführungsrinne 102 mit einer Steckdosenzuleitung 106 zu einem Kabelbaum 108 zusammenzufassen oder in diesem Kabelbaum zu einer Anschlusseinheit am Kraftfahrzeug weiterverlaufen zu lassen.

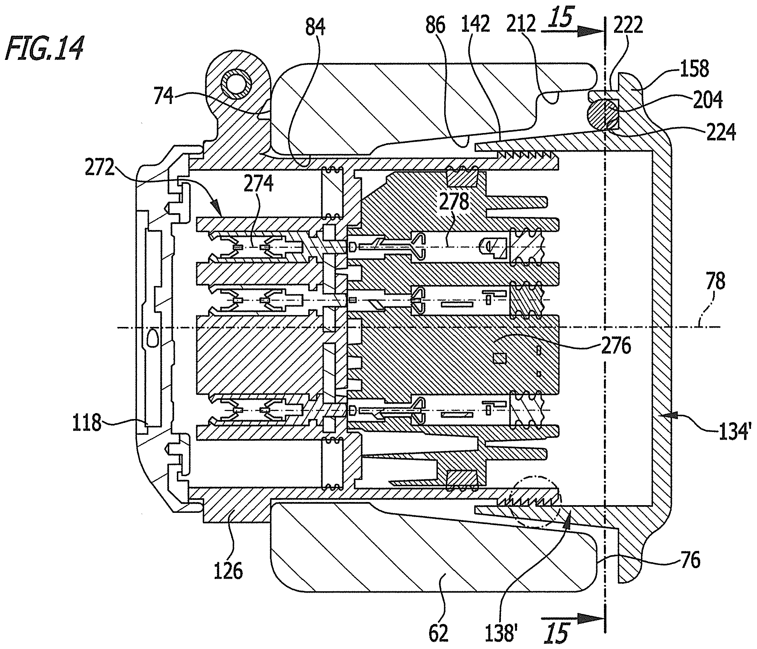

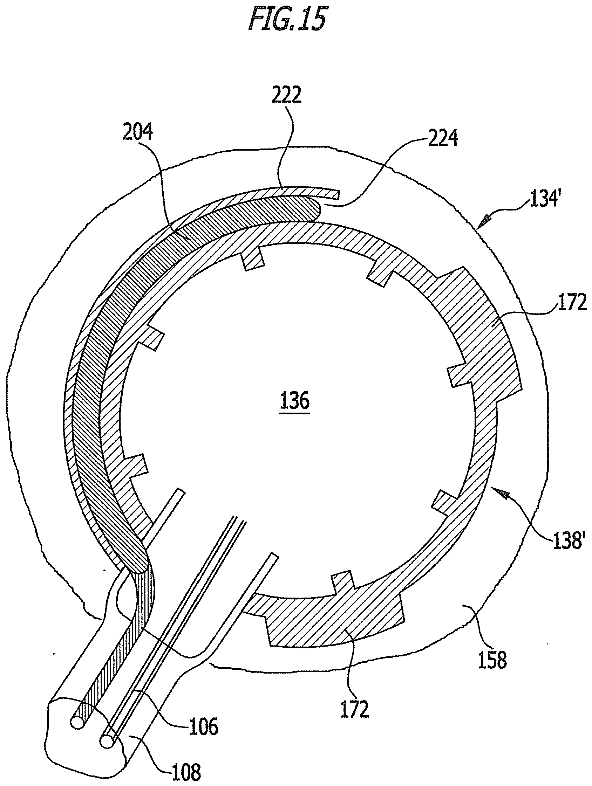

Bei einem dritten Ausführungsbeispiel der erfindungsgemäßen Anhängekupplung, dargestellt in Fig. 14 und 15 ist die Sensorverbindungsleitung 204 zum Schutz derselben an dem Haltering 138' dadurch geführt, dass in dem Bereich des Stützflanschs 158, welcher der stufenförmigen Vertiefung 212 zugewandt ist, an den Stützflansch 158 ein parallel zur Außenfläche 162 des Halterings 138 verlaufender Stützsteg 222 angeordnet ist, der im Abstand von der Außenfläche 162 des Halterings 138' verläuft, so dass zwischen dem Stützsteg 222 und dem Haltering 138' ein U-förmiger Kanal 224 entsteht, in welchen die Sensorverbindungsleitung 204 eingelegt und durch welchen die Verbindungsleitung 204 geführt ist, so dass diese gegen mechanische Einwirkungen geschützt in dem Haltering 138', geführt von dem Mündungsbereich 214 bis zu der Kabelführungsrinne 102, verlaufen kann.

Im Übrigen sind auch bei diesem dritten Ausführungsbeispiel der erfindungsgemäßen Anhängekupplung all diejenigen Elemente, die mit denen des ersten Ausführungsbeispiels identisch sind, mit denselben Bezugszeichen versehen, so dass hinsichtlich der Beschreibung derselben vollinhaltlich auf die Ausführungen zum ersten Ausführungsbeispiel Bezug genommen werden kann.

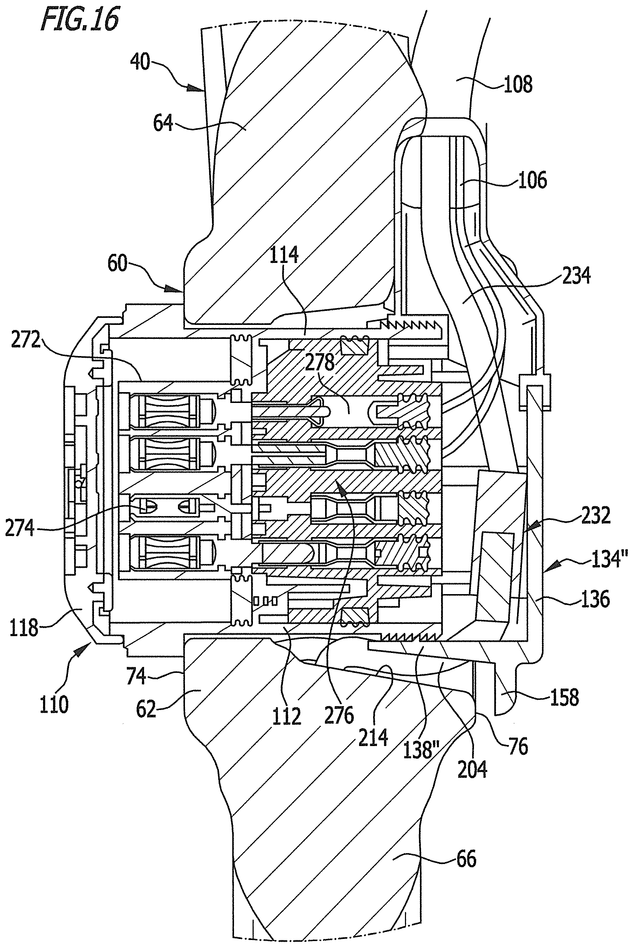

Bei einem vierten Ausführungsbeispiel, dargestellt in Fig. 16 ist die von dem Sensorsystem 202 kommende Verbindungsleitung 204 vom Mündungsbereich 214 durch den Haltering 138" in den Gehäusedeckel 134" eingeführt und mittels einer Steckverbindung 232, die an dem Gehäusedeckel 134", vorzugsweise dem Abdeckkörper 136 des Gehäusedeckels 134", fixiert ist, mit einer in dem Kabelbaum 108 mit der Steckdosenzuleitung 106 mitgeführten Sensorleitung 234 verbunden, so dass der die Steckdosenzuleitung 106 umfassende Kabelbaum 108 vorab mit der Sensorleitung 234 ausgerüstet werden kann, die dann innerhalb des Gehäusedeckels 134" über die Steckverbindung 232 mit der vom Sensorsystem 202 kommenden Sensorverbindungsleitung 204 verbunden werden kann.

Im Übrigen sind bei dem vierten Ausführungsbeispiel all diejenigen Elemente, die mit denen der voranstehenden Ausführungsbeispiele identisch sind, mit denselben Bezugszeichen versehen, so dass auf die Ausführungen zu diesen Ausführungsbeispielen vollinhaltlich Bezug genommen werden kann.

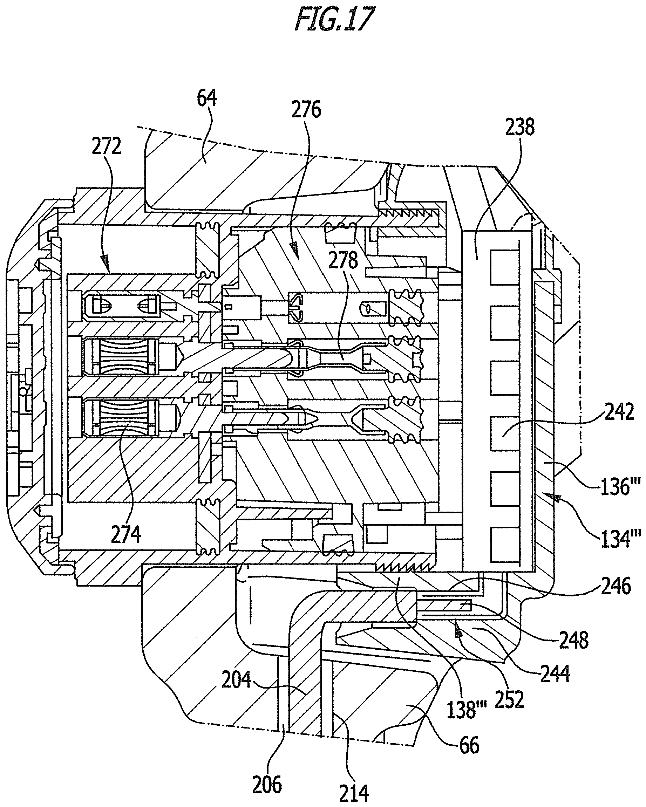

Bei einem fünften Ausführungsbeispiel einer erfindungsgemäßen Anhängekupplung, dargestellt in Fig. 17, sind diejenigen Teile, die mit denen des voranstehenden Ausführungsbeispiels identisch sind, mit denselben Bezugszeichen versehen, so dass hinsichtlich der Beschreibung derselben vollinhaltlich auf die Ausführungen zu den voranstehenden Ausführungsbeispielen, insbesondere dem ersten Ausführungsbeispiel, Bezug genommen werden kann.

Im Gegensatz zu den voranstehenden Ausführungsbeispielen ist bei diesem Ausführungsbeispiel der Gehäusedeckel 134"' so ausgebildet, dass dieser noch mit einer elektronischen dem Sensorsystem 202 zugeordneten Schaltung 242, beispielsweise einer Auswerteschaltung für das Sensorsystem 202 versehen ist, wobei die Schaltung 242 vorzugsweise auf einer Innenseite des Abdecckörpers 136"' in einem Aufnahmeraum 238 des Gehäusedeckels 134"' angeordnet und gehalten ist.

Bei diesem Ausführungsbeispiel ist ferner an den Haltering 138"' ein Steckverbindergehäuse 244 angeformt, in welchem Steckkontakteinheiten 246 angeordnet sind, in welche Kontaktstifte 248 der Sensorverbindungsleitung 204 einsteckbar sind, so dass eine Verbindung zwischen der Sensorverbindungsleitung 204 mit der Schaltung 242 über eine Steckverbindung 252 herstellbar ist, von welcher das Steckverbindergehäuse 244 und die Stecckontakteinheiten 246 in den Gehäusedeckel 234"' integriert sind.

Im Übrigen sind bei dem fünften Ausführungsbeispiel all diejenigen Elemente, die mit denen der voranstehenden Ausführungsbeispiele identisch sind, mit denselben Bezugszeichen versehen, so dass auf die Ausführungen zu diesen Ausführungsbeispielen vollinhaltlich Bezug genommen werden kann.

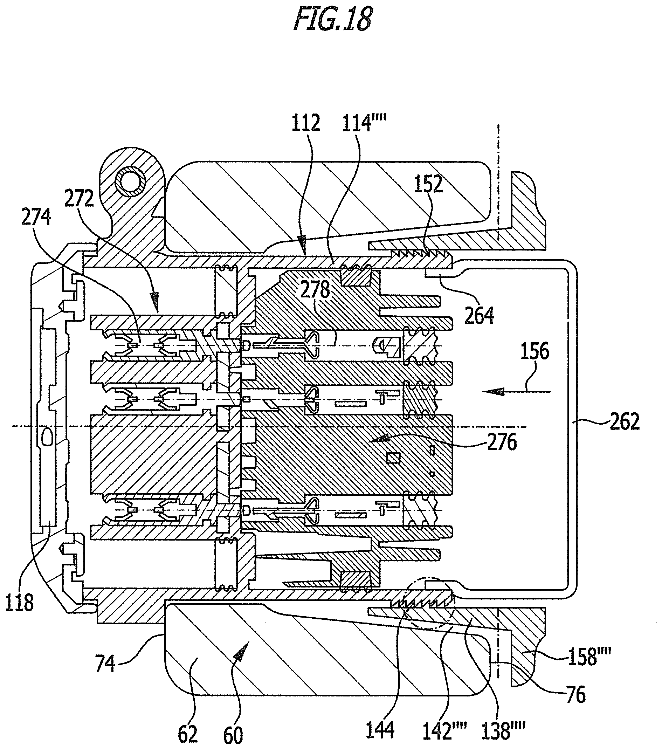

Bei einem in Fig. 18 dargestellten sechsten Ausführungsbeispiel einer erfindungsgemäßen Anhängekupplung, ist im Gegensatz zu den voranstehenden Ausführungsbeispielen die Gehäusehülse 114"" selbst mit einem Deckel 262 versehen, wobei der Deckel 262 beispielsweise mit einem Haltebereich 264 in die Gehäusehülse 114"" eingreift und dadurch entweder durch Formschluss oder durch andere Befestigungsmöglichkeiten, wie beispielsweise Kleben, mit der Gehäusehülse 114"" verbunden ist.

Die Fixierung der Gehäusehülse erfolgt jedoch nach wie vor durch den Haltering 138"", der ebenfalls noch den Stützflansch 158"" aufweist, welcher sich an der zweiten Stirnseite 76 des Ringkörpers 62 abstützt. Die Fixierung der Gehäusehülse 114"" erfolgt dabei durch den Haltering 138"" in gleicher Weise wie im Zusammenhang mit den voranstehenden Ausführungsbeispielen beschrieben.

Im Übrigen sind bei dem sechsten Ausführungsbeispiel all diejenigen Elemente, die mit den voranstehenden Ausführungsbeispielen identisch sind, mit denselben Bezugszeichen versehen, so dass auf die Ausführungen zu den voranstehenden Ausführungsbeispielen Bezug genommen werden kann.

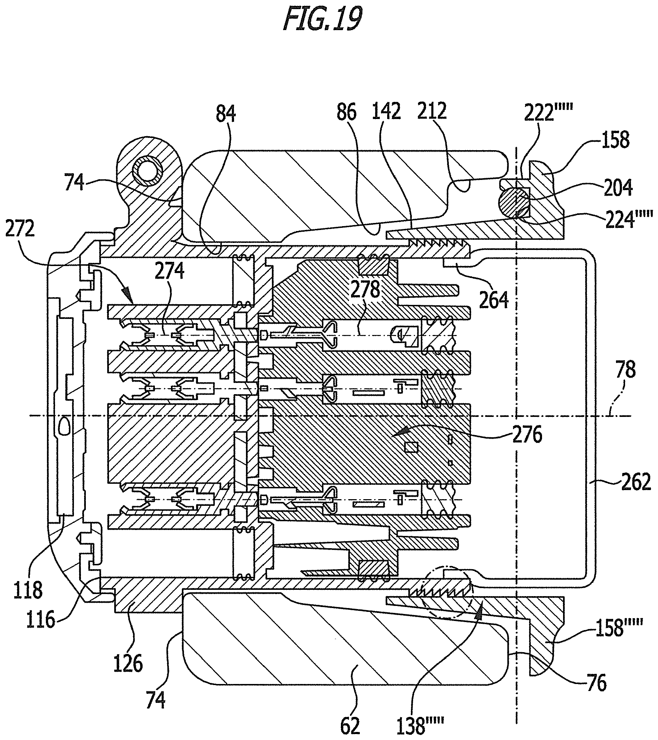

Bei einem siebten Ausführungsbeispiel, dargestellt in Fig. 19, ist analog zum in Fig. 14 und 15 dargestellten dritten Ausführungsbeispiel der Haltering 138""' mit dem Stützsteg 222""' versehen, so dass sich der Kanal 224""' bildet, in welchem die Sensorverbindungsleitung 204 durch den Haltering 138""' von dem Mündungsbereich 214 zu der Kabelführungsrinne 102 geführt werden kann.

Im Übrigen sind bei dem siebten Ausführungsbeispiel all diejenigen Elemente, die mit den voranstehenden Ausführungsbeispielen identisch sind, mit denselben Bezugszeichen versehen, so dass hinsichtlich der Beschreibung derselben vollinhaltlich auf die Ausführungen zu diesen Ausführungsbeispielen Bezug genommen werden kann.

Bei allen Ausführungsbeispielen ist in der Steckdose 110 innerhalb des Steckdosengehäuses 112 ein Kontaktträger 272 vorgesehen, in welchem Stecckontakte 274 vorgesehen sind, die mit einem in die Steckdose 110 einsteckbaren Stecker verbunden werden können.

Die Steckkontakte 274 werden ihrerseits kontaktiert durch einen als Ganzes mit 276 bezeichneten Kontaktstecker, der seinerseits wiederum Kontaktelemente 278 aufweist, die einerseits mit den Steckkontakten 274 im eingesteckten Zustand des Kontaktsteckers 276 verbunden sind und andererseits mit Einzeladern 282 der Steckdosenzuleitung 106 verbunden sind.

## Patentansprüche

1. Anhängekupplung umfassend einen eine Kupplungskugel (46) tragenden sowie eine Steckdosenaufnahme (60) für eine Steckdose (110) zur Stromversorgung von an der Kupplungskugel (46) angreifenden Einheiten aufweisenden Kugelhals (40), wobei die Steckdose (110) ein Steckdosengehäuse (112) mit einer Gehäusehülse (114) aufweist, die mit einer Einstecköffnung (116) versehen ist, und wobei die Einstecköffnung (116) durch einen an der Gehäusehülse (112) schwenkbar gelagerten Deckel (118) verschließbar ist, wobei die Steckdosenaufnahme (60) einen Aufnahmekanal (72) aufweist, in welchem sich die Gehäusehülse (114) von einer ersten Seite (74) der Steckdosenaufnahme (60) ausgehend hineinerstreckt, wobei die Gehäusehülse (114) an der ersten Seite (74) der Steckdosenaufnahme (60) mit einer Anlagefläche (128) anliegt und wobei die Gehäusehülse (114) an der Steckdosenaufnahme (60) durch ein von einer zweiten Seite der Steckdosenaufnahme (60) ausgehend aufgesetztes Halteelement (138) fixiert ist, welches sich an der Steckdosenaufnahme (60) abstützt und mit der Gehäusehülse (114) durch eine Rastverbindung (144, 152) verbunden ist, **dadurch gekennzeichnet, dass** sich das Halteelement (138) zur Fixierung des Halteelements (138) an der Steckdosenaufnahme in dem Aufnahmekanal (72) abstützt.

2. Anhängekupplung nach Anspruch 1, **dadurch gekennzeichnet, dass** sich das Halteelement (138) an einem sich konisch erweiternden Wandbereich (86) des Aufnahmekanals (72) abstützt.

3. Anhängekupplung nach einem der voranstehenden Ansprüche, **dadurch gekennzeichnet, dass** sich das Halteelement (138) mit einem Stützflansch (158) an einer der ersten Seite (74) gegenüberliegenden zweiten Seite (76) der Steckdosenaufnahme (60) abstützt.

4. Anhängekupplung nach einem der voranstehenden Ansprüche, **dadurch gekennzeichnet, dass** das Halteelement (138) an der Steckdosenaufnahme (60) durch Formschlusselemente (92, 172) drehfest festgelegt ist.

5. Anhängekupplung nach Anspruch 4, **dadurch gekennzeichnet, dass** das Halteelement (138) ein Formschlusselement (172) aufweist, welches mit einem Formschlusselement (92) der Steckdosenaufnahme (60) eine drehfeste Formschlussverbindung eingeht.

6. Anhängekupplung nach Anspruch 4 oder 5, **dadurch gekennzeichnet, dass** die Steckdosenaufnahme (60) als Formschlusselement (92) eine sich von der zweiten Seite (76) der Steckdosenaufnahme (60) in den Aufnahmekanal (72) hineinerstreckende Tasche (94) aufweist.

7. Anhängekupplung nach Anspruch 6, **dadurch gekennzeichnet, dass** das Halteelement (138) einen in die Tasche (94) eingreifenden Körper (174) aufweist.

8. Anhängekupplung nach einem der Ansprüche 4 bis 7, **dadurch gekennzeichnet, dass** die Formschlusselemente (92, 172) sich parallel zu einer Aufsetzrichtung (156) des Halteelements (138) erstrecken.

9. Anhängekupplung nach einem der voranstehenden Ansprüche, **dadurch gekennzeichnet, dass** das Halteelement (138) und die Gehäusehülse (114) in mindestens einer Drehstellung relativ zueinander drehfest miteinander verbindbar sind.

10. Anhängekupplung nach einem der voranstehenden Ansprüche, **dadurch gekennzeichnet, dass** das Halteelement (138) und die Gehäusehülse (114) durch Formschlusselemente (184, 186) drehfest verbunden sind.

11. Anhängekupplung nach Anspruch 9 oder 10, **dadurch gekennzeichnet, dass** mindestens eines der Formschlusselemente (184, 186) an mehreren Winkelpositionen um eine Mittelachse (146) an der Gehäusehülse (114) und/oder dem Halteelement (138) angeordnet ist, in welches das jeweils andere Formschlusselement (186, 184) eingreift.

12. Anhängekupplung nach einem der voranstehenden Ansprüche, **dadurch gekennzeichnet, dass** die Rastverbindung (144, 152) innerhalb eines sich in der Aufsetzrichtung (156) erstreckenden Rastbereichs positionsunabhängig wirksam ist.

13. Anhängekupplung nach einem der voranstehenden Ansprüche, **dadurch gekennzeichnet, dass** das Halteelement (138) an der Gehäusehülse (114) dadurch verrastbar ist, dass entweder die Gehäusehülse (114) oder das Halteelement (138) eine Rastverzahnung (144) mit einer sich parallel zur Aufsetzrichtung (156) erstreckenden Folge von Rastzähnen (148) und das Halteelement (138) oder die Gehäusehülse (114) eine Gegenverzahnung (152) mit mindestens einem in die Folge von Rastzähnen (148) eingreifenden Rastzahn (154) aufweisen.

14. Anhängekupplung nach einem der voranstehenden Ansprüche, **dadurch gekennzeichnet, dass** das Halteelement (138) als Teil eines Gehäusedeckels (134) zum Abschluss der Gehäusehülse (114) auf einer der Einstecköffnung (116) gegenüberliegenden Seite ausgebildet ist.

## Claims

1. Trailer coupling comprising a ball neck (40) which supports a coupling ball (46), and also which comprises a socket receptacle (60) for a socket (110) for the power supply of units acting on the coupling ball (46), the socket (110) having a socket housing (112) with a housing sleeve (114), which is provided with an insertion opening (116), and the insertion opening (116) being closable by a cover (118) that is mounted pivotably on the housing sleeve (112), wherein the socket receptacle (60) has a receiving channel (72), into which the housing sleeve (114) extends starting from a first side (74) of the socket receptacle (60), wherein the housing sleeve (114) bears against the first side (74) of the socket receptacle (60) via a bearing surface (128), and wherein the housing sleeve (114) is fixed to the socket receptacle (60) by a retaining element (138), which is fitted starting from a second side of the socket receptacle (60) and which is supported on the socket receptacle (60) and is connected to the housing sleeve (114) by a latched connection (144, 152), **characterized in that**, for fixing the retaining element (138) to the socket receptacle, the retaining element (138) is supported in the receiving channel (72).

2. Trailer coupling according to Claim 1, **characterized in that** the retaining element (138) is supported on a conically widening wall region (86) of the receiving channel (72).

3. Trailer coupling according to one of the preceding claims, **characterized in that** the retaining element (138) is supported via a supporting flange (158) on a second side (76) of the socket receptacle (60) opposite the first side (74).

4. Trailer coupling according to one of the preceding claims, **characterized in that** the retaining element (138) is secured on the socket receptacle (60) in a manner fixed against rotation by positively-locking elements (92, 172).

5. Trailer coupling according to Claim 4, **characterized in that** the retaining element (138) has a positively-locking element (172), which enters into a rotationally fixed positively-locking connection with a positively-locking element (92) of the socket receptacle (60).

6. Trailer coupling according to Claim 4 or 5, **characterized in that** the socket receptacle (60), as positively-locking element (92), has a pocket (94) extending from the second side (76) of the socket receptacle (60) into the receiving channel (72).

7. Trailer coupling according to Claim 6, **characterized in that** the retaining element (138) has a body (174) engaging with the pocket (94).

8. Trailer coupling according to one of Claims 4 to 7, **characterized in that** the positively-locking elements (92, 172) extend parallel to a fitting direction (156) of the retaining element (138).

9. Trailer coupling according to one of the preceding claims, **characterized in that** the retaining element (138) and the housing sleeve (114) are connectable to one another in a manner fixed against rotation relative to one another in at least one rotary position.

10. Trailer coupling according to one of the preceding claims, **characterized in that** the retaining element (138) and the housing sleeve (114) are connected in a manner fixed against rotation by positively-locking elements (184, 186).

11. Trailer coupling according to Claim 9 or 10, **characterized in that** at least one of the positively-locking elements (184, 186) is arranged on the housing sleeve (114) and/or the retaining element (138) in a number of angular positions about the centre axis (146), the other positively-locking element (186, 184) engaging with the first-mentioned positively-locking element.

12. Trailer coupling according to one of the preceding claims, **characterized in that** the latched connection (144, 152) is effective in a position-independent manner within a latching region extending in the fitting direction (156).

13. Trailer coupling according to one of the preceding claims, **characterized in that** the retaining element (138) is latchable to the housing sleeve (114) **in that** either the housing sleeve (114) or the retaining element (138) has a latching toothing (144) with a series of latching teeth (148) extending parallel to the fitting direction (156) and the retaining element (138) or the housing sleeve (114) has a counter-toothing (152) with at least one latching tooth (154) meshing with the series of latching teeth (148).

14. Trailer coupling according to one of the preceding claims, **characterized in that** the retaining element (138) is formed as part of a housing cover (134) for closing the housing sleeve (114) on a side opposite the insertion opening (116).

## Revendications

1. Attelage comprenant un col porte-boule (40) portant une boule d'attelage (46) ainsi qu'un logement de prise de courant (60) pour une prise de courant (110) destinée à alimenter en courant des unités agissant sur la boule d'attelage (46), dans lequel la prise de courant (110) présente un boîtier de prise de courant (112) avec un manchon de boîtier (114), qui est pourvu d'une ouverture d'enfichage (116), et
dans lequel l'ouverture d'enfichage (116) peut être fermée par un couvercle (118) monté pivotant sur le manchon de boîtier (112),
dans lequel le logement de prise de courant (60) présente un canal de logement (72), à l'intérieur duquel le manchon de boîtier (114) s'étend à partir d'une première face (74) du logement de prise de courant (60), dans lequel le manchon de boîtier (114) s'applique contre la première face (74) du logement de prise de courant (60) avec une surface d'appui (128) et dans lequel le manchon de boîtier (114) est fixé sur le logement de prise de courant (60) par un élément de retenue (138) mis en place à partir d'une deuxième face du logement de prise de courant (60), lequel élément s'appuie sur le logement de prise de courant (60) et est relié au manchon de boîtier (114) par une liaison par encliquetage (144, 152), **caractérisé en ce que**
l'élément de retenue (138) s'appuie sur le logement de prise de courant dans le canal de logement (72) pour la fixation de l'élément de retenue (138).

2. Attelage selon la revendication 1, **caractérisé en ce que** l'élément de retenue (138) s'appuie sur une zone de paroi (86), s'élargissant de façon conique, du canal de logement (72).

3. Attelage selon l'une quelconque des revendications précédentes, **caractérisé en ce que** l'élément de retenue (138) s'appuie avec une bride d'appui (158) sur une deuxième face (76), opposée à la première face (74), du logement de prise de courant (60).

4. Attelage selon l'une quelconque des revendications précédentes, **caractérisé en ce que** l'élément de retenue (138) est fixé de manière solidaire en rotation sur le logement de prise de courant (60) par des éléments de coopération de forme (92, 172).

5. Attelage selon la revendication 4, **caractérisé en ce que** l'élément de retenue (138) présente un élément de coopération de formes (172), lequel engendre une liaison par coopération de formes solidaire en rotation avec un élément de coopération de formes (92) du logement de prise de courant (60).

6. Attelage selon la revendication 4 ou 5, **caractérisé en ce que** le logement de prise de courant (60) présente en tant qu'élément de coopération de formes (92) une poche (94) s'étendant à l'intérieur du canal de logement (72) à partir de la deuxième face (76) du logement de prise de courant (60).

7. Attelage selon la revendication 6, **caractérisé en ce que** l'élément de retenue (138) présente un corps (174) s'insérant dans la poche (94).

8. Attelage selon l'une quelconque des revendications 4 à 7, **caractérisé en ce que** les éléments de coopération de formes (92, 172) s'étendent parallèlement à une direction de mise en place (156) de l'élément de retenue (138).

9. Attelage selon l'une quelconque des revendications précédentes, **caractérisé en ce que** l'élément de retenue (138) et le manchon de boîtier (114) peuvent être reliés l'un à l'autre de manière solidaire en rotation l'un par rapport à l'autre dans au moins une position de rotation.

10. Attelage selon l'une quelconque des revendications précédentes, **caractérisé en ce que** l'élément de retenue (138) et le manchon de boîtier (114) sont reliés de manière solidaire en rotation par des éléments de coopération de formes (184, 186).

11. Attelage selon la revendication 9 ou 10, **caractérisé en ce qu'**au moins un des éléments de coopération de formes (184, 186) est disposé en plusieurs positions angulaires autour d'un axe médian (146) sur le manchon de boîtier (114) et/ou l'élément de retenue (138), dans lequel s'insère l'autre élément de coopération de formes (186, 184) respectif.

12. Attelage selon l'une quelconque des revendications précédentes, **caractérisé en ce que** la liaison par encliquetage (144, 152) est active indépendamment de la position à l'intérieur d'une zone d'encliquetage s'étendant dans la direction de mise en place (156).

13. Attelage selon l'une quelconque des revendications précédentes, **caractérisé en ce que** l'élément de retenue (138) peut être encliqueté sur le manchon de boîtier (114) par le fait que soit le manchon de boîtier (114) soit l'élément de retenue (138) présente une denture d'encliquetage (144) avec une série de dents d'encliquetage (148) s'étendant parallèlement à la direction de mise en place (156) et l'élément de retenue (138) ou le manchon de boîtier (114) présente une denture complémentaire (152) avec au moins une dent d'encliquetage (154) s'insérant dans la série de dents d'encliquetage (148).

14. Attelage selon l'une quelconque des revendications précédentes, **caractérisé en ce que** l'élément de retenue (138) est réalisé en tant que partie d'un couvercle de boîtier (134) destiné à fermer le manchon de boîtier (114) sur une face opposée à l'ouverture d'enfichage (116).
